# EUROPÄISCHE PATENTANMELDUNG

(11) **EP 1 849 968 A2**
(43) Veröffentlichungstag der Anmeldung: **31.10.2007**
(21) Anmeldenummer: 07104759.1
(22) Anmeldetag: 23.03.2007
(51) Int. Cl.: F01L 1/344

(54) **Plattenrückschlagventil mit seitlicher Abströmung und Steuerkante**

(30) Priorität: 27.04.2006 DE 102006019543
(71) Anmelder: Schaeffler KG, 91074 Herzogenaurach (DE)
(72) Erfinder: Schmitt, Marco, 36043, Fulda (DE)

(57) **Zusammenfassung**

Es wird eine Rückschlagventilvorrichtung für ein Kraftfahrzeug beschrieben. Die Rückschlagventilvorrichtung weist dabei ein Ventilgehäuse (1), aufweisend eine Zulauföffnung (2), , eine Ablauföffnung (3) und eine Dichtkante(7), und ein Ventilelement (4) auf, welches im Ventilgehäuse (1) beweglich gelagert ist. Wenn sich das Ventilelement (4) in einer ersten Position befindet, ist ein erster Strömungsquerschnitt zwischen der Ablauföffnung (3) und dem Ventilelement (4) bereitstellbar (A1). Wenn sich das Ventilelement in einer zweiten Position befindet, ist die Ablauföffnung (3) von dem Ventilelement (4) geschlossen. Das Ventilelement (4) ist dabei zwischen den Positionen beweglich gelagert. Bei Bewegung des Ventilelements (4) in einem ersten Bewegungsbereich (B1) erfolgt eine stetige Änderung des Strömungsquerschnitts (A1), wobei bei Bewegung des Ventilelements (4) in einem zweiten Bewegungsbereich (B2) ein gegenüber dem ersten Strömungsquerschnitt (A1) reduzierter Strömungsquerschnitt (A2) bereitstellbar ist Das Ventilelement (4) liegt an der Dichtkante (7) an, wenn es sich in der zweiten Position befindet.

## Beschreibung

### Gebiet der Erfindung

Die vorliegende Erfindung betrifft eine Rückschlagventilvorrichtung für ein Kraftfahrzeug und ein Verfahren zur Steuerung einer Strömungsrichtung eines Mediums für ein Kraftfahrzeug. Die Erfindung betrifft ferner die Verwendung einer Rückschlagventilvorrichtung in einem Nockenwellenverstellsystem, in einem hydraulischen Riemen- oder Kettenspannsystem und in einem Kraftfahrzeug.

### Hintergrund der Erfindung

In hydraulischen Drucksystemen von Kraftfahrzeugen werden zur Steuerung einer bestimmten Strömungsrichtung eines hydraulischen Mediums Rückschlagventile eingesetzt, die sich in einer bestimmten Strömungsrichtung öffnen und in entgegengesetzter Strömungsrichtung verschließen. Hydraulische Drucksysteme in Kraftfahrzeugen, wie beispielsweise Nockenwellenverstellsysteme und Ketten- oder Riemenspannsysteme, sind häufig äußerst komplex mit einer Vielzahl von Verbrauchern ausgebildet. Daraus ergibt sich an vielen Stellen in einem hydraulischen System häufig eine Druckmittelentnahme, so dass sich Druckspitzen und oszillierende Drücke aufbauen. Dies stellt besonders hohe Anforderungen an die eingesetzten Rückschlagventile, die eine bestimmte Strömungsrichtung absichern sollen, ohne eine Umkehrung des Strömungsflusses zuzulassen. Aufgrund der Schwingeigenschaften der Drücke kann das Rückschlagventil beispielsweise beeinflusst werden, ohne dass eine Öffnung oder Schließung des Rückschlagventils gewünscht wird.

In Kraftfahrzeugen und insbesondere in Nockenwellenverstellsystemen werden zur Strömungsumlenkung zudem Rückschlagventile mit seitlicher Abströmung eingesetzt. Die Zulauf- sowie die Ablauföffnung dieser Rückschlagventile weisen dabei unterschiedliche Eingangsöffnungen auf, so dass eine Strömung umgelenkt werden kann. Rückschlagventile mit seitlicher Abströmung sind beispielsweise aus der DE 29 01 902 und der EP 12 84 340 bekannt. DE 29 01 902 zeigt ein Rückschlagventil mit seitlicher Abströmung, in der sich ein Kugelelement in einer Führung derart bewegen kann, dass eine Zulauföffnung verschlossen wird. Bei steigendem Druckniveau in der Zulauföffnung bewegt sich die Kugel in eine Öffnungsstellung, in der sich ein Strömungsquerschnitt einstellt. Das Rückschlagventil unterscheidet lediglich zwischen einer Strömungsstellung und einer Verschlussstellung, wobei der Phasenübergang äußerst abrupt und unverzögert stattfindet. Aufgrund des anliegenden Druckniveaus an der Einlauföffnung und der Ablauföffnung des Rückschlagventils öffnet oder schließt sich das Rückschlagventil selbstständig, wodurch bei einer Druckumkehr bis zur Schließung des Ventils größere Fluidmengen entweichen können. Aus der EP 12 84 340 sind ebenfalls Ventile für ein Nockenwellenverstellsystem mit seitlicher Abströmung bekannt, die über eine Steuereinrichtung gesteuert werden können.

Herkömmliche Rückschlagventile öffnen sich durch ihre konstruktive Ausgestaltung schlagartig und abrupt bei einer Änderung des Druckverhältnisses. Gerade bei oszillierenden Drücken an den Eingangsseiten und Ausgangsseiten eines Rückschlagventils kommt es bei Überlagerung der Schwingungen häufig zu unabsichtlichen Öffnungen der Rückschlagventile. Bei einer schlagartigen Öffnung und Schließung der Rückschlagventile treten zudem aufgrund der Trägheit der Druckmittelsäule in den Druckmittelleitungen Druckspitzen im System auf, die angeschlossene Verbraucher schädigen können.

Eine Überlagerung der oszillierenden Drücke an der Eingangs- und Ausgangsseite des Ventils, so wie das damit verbundene ungezielte Öffnen des Rückschlagventils, führt zudem zu einem Druckmittelaustausch zwischen den zwei Drucksystemen.

### Darstellung der Erfindung

Es ist eine Aufgabe der vorliegenden Erfindung ein effektives Rückschlagventil anzugeben.

Demgemäß wird eine Rückschlagventilvorrichtung und ein Verfahren zur Steuerung einer Strömungsrichtung eines Mediums, die Verwendung einer Rückschlagventilvorrichtung in einem Kraftfahrzeug sowie die Verwendung einer Rückschlagventilvorrichtung in einem Nockenwellenverstellsystem und/oder in einem Riemen- oder Kettenspannsystem geschaffen.

Gemäß einer beispielhaften Ausführungsform wird eine Rückschlag-Ventilvorrichtung für ein Nockenwellenverstellersystem bereitgestellt. Die Rückschlag-Ventilvorrichtung weist ein Ventilgehäuse, aufweisend eine Zulauföffnung, eine Ablauföffnung und eine Dichtkante, und ein Ventilelement auf. Das Ventilelement ist im Ventilgehäuse beweglich oder gleitend gelagert, wobei, wenn sich das Ventilelement in einer ersten Position befindet, ein erster Strömungsquerschnitt zwischen der Ablauföffnung und dem Ventilelement bereitstellbar ist und wobei, wenn sich das Ventilelement in einer zweiten Position befindet, die Ablauföffnung von dem Ventilelement geschlossen ist. Bei Bewegung des Ventilelements in einem ersten Bewegungsbereich erfolgt eine stetige Änderung des Strömungsquerschnitts, wobei bei Bewegung des Ventilelements in einem zweiten Bewegungsbereich ein gegenüber dem ersten Strömungsquerschnitt reduzierter Strömungsquerschnitt bereitstellbar ist. Das Ventilelement liegt dabei an der Dichtkante an, wenn sich das Ventilelement in der zweiten Position befindet.

In einer weiteren beispielhaften Ausführungsform wird ein Verfahren zur Steuerung einer Strömungsrichtung eines Mediums für ein Nockenwellenverstellersystem bereitgestellt. Zwischen einer ersten Position und einer zweiten Position wird ein Ventilelement bewegt. Beim Bewegen des Ventilelements wird der erste Strömungsquerschnitt in einem ersten Bewegungsbereich stetig geändert. Beim Bewegen des Ventilelements in einem zweiten Bewegungsbereich wird ein gegenüber dem ersten Strömungsquerschnitt reduzierter Strömungsquerschnitt bereitgestellt. Wenn sich das Ventilelement in einer zweiten Position befindet, wird zwischen der Ablauföffnung und dem Ventilelement mittels einer Dichtkante der Strömungsquerschnitt geschlossen.

In einer weiteren beispielhaften Ausführungsform wird eine Rückschlagventilvorrichtung in einem Kraftfahrzeug verwendet. In einer weiteren beispielhaften Ausführungsform wird eine Rückschlagventilvorrichtung in einem Nockenwellenverstellsystem und/oder in einem hydraulischen Riemen- oder Kettenspannsystem verwendet.

Unter dem Begriff Strömungsquerschnitt wird eine durch eine Beabstandung verursachte Fläche verstanden, durch den ein Medium bzw. ein hydraulisches Druck- oder Schmiermittel fließen kann. Der Strömungsquerschnitt kann beispielsweise als die Fläche von einer Oberkante des Ventilelements zu einer Kante einer Öffnung in dem Ventilgehäuse definiert werden. Bei Bewegung des Ventilelements ändert sich auch der Abstand zwischen der Oberkante des Ventils zu dem Ventilgehäuse und insbesondere kann sich die freigegebene Öffnung der Strömungsfläche in dem Ventilgehäuse ändern, so dass sich entsprechend der Verschiebung des Ventilelements der Strömungsquerschnitt ändert. Somit bestimmt die Geometrie des Ventilgehäuses und des Ventilelements den Strömungsquerschnitt des Ventils. Bleibt der Abstand bzw. die Fläche zwischen dem Ventilelement und der Gehäusefläche konstant, so bleibt folglich auch der Strömungsquerschnitt konstant.

Das Ventilelement kann als Kugel oder als Platte bzw. Teller ausgebildet sein. Bei einer Plattenform des Ventilgehäuses bestimmt beispielsweise der Abstand von der Plattenkante zu dem Ventilgehäuse und insbesondere zu einer der Plattenkante gegenüberliegenden Kante der Öffnung in dem Ventilgehäuse einen Strömungsquerschnitt.

Bei herkömmlichen Rückschlagventilen wird der Strömungsquerschnitt bzw. das Strömungsvolumen schlagartig maximiert oder minimiert, wobei aufgrund der Trägheit der Druckmittelsäule in den Druckmittelleitungen hohe Druckschwankungen im System entstehen können, die angeschlossene Verbraucher schädigen können. Gemäß einem Ausführungsbeispiel der vorliegenden Erfindung wird ein Rückschlagventil geschaffen, mit dem während des Schließvorgangs das Strömungsvolumen zunächst kontinuierlich auf ein minimiertes Strömungsvolumen reduziert und im Anschluss geschlossen wird. Im Gegensatz zu einer abrupten Schließung des Ventils, wird das Strömungsvolumen zunächst kontinuierlich auf ein Mindestmass reduziert. Ab einem gewissen reduzierten Strömungsvolumen kann das Rückschlagventil dann den Strömungsdurchfluss unterbrechen, ohne dass dabei Druckschwankungen verursacht werden In anderen Worten wird der Strömungsquerschnitt in zwei Stufen verringert oder vergrößert. Wird beispielsweise das Ventilelement von der offenen Position zu der Schließposition bewegt, so verringert das Ventilelement die Strömung zunächst kontinuierlich bzw. stetig, bis auf einen minimalen Strömungsquerschnitt, der dann im Endbereich des zweiten Bewegungsbereich mittels einer Dichtkante abrupt geschlossen wird. Dieser minimale Strömungsquerschnitt bleibt in einem zweiten Bereich beim weiteren Schließen des Ventils im Wesentlichen konstant. In dem Bereich, indem das Ventilelement die Öffnung in dem Ventilgehäuse verdeckt oder abdichtet, kann die reduzierte Strömung oder der reduzierte Strömungsquerschnitt durch Leckagen hervorgerufen werden.

Wenn das Ventilelement gegen die Zulauföffnung bzw. gegen die Dichtkante gepresst wird, wird der Strömungsfluss im Wesentlichen komplett unterbunden.

Da der Strömungsquerschnitt jedoch bereits kontinuierlich auf ein Mindestmass reduziert worden ist, können Druckschwankungen aufgrund des reduzierten Volumenstroms wirkungsvoll verhindert werden, Zudem verringert sich die Aufschlaggeschwindigkeit des Ventilelements, wenn es die Zulauföffnung schließt. Dadurch verringert sich die Schließkraft und die Aufprallenergie des Ventilelements, wodurch eine Geräuschentwicklung verringert wird. Mittels der Dichtkante kann im Vergleich zu herkömmlichen Rückschlagventilen die Dichtwirkung des erfindungsgemäßen Ventils verbessert werden und somit in geschlossener Stellung ein Leckagestrom verringert oder gar verhindert werden.

An einem Nockenwellenverstellersystem arbeiten zwei verschiedene oszillierende Drücke. Auf der einen Seite kann der von der Drehzahl abhängige Druck einer Ölpumpe anliegen und auf der anderen Seite der im Nockenwellenversteller vorliegende oszillierende Druck. In den meisten Automobilfahrzeugen kann die Ölpumpe direkt von der Motoreinheit angetrieben werden, sodass aufgrund unterschiedlicher Beschleunigung des Motors zu den unterschiedlichen Zündzeitpunkten eine unterschiedliche Leistung, bzw. ein schwankende Druckbereitstellung von der Ölpumpe bereitgestellt werden kann. Dieser schwankende Druck kann an der Zulauföffnung des Rückschlagventils anliegen und auf das Ventilelement einwirken.

Andererseits kann der anliegende Druck seitens des Nockenwellenverstellersystems ebenfalls Druckschwankungen ausgesetzt sein. Diese Druckschwankungen können beispielsweise durch Unregelmäßigkeiten in der Drehung der Nockenwelle entstehen. Schlagen beispielsweise die Nocken der Nockenwelle zum Öffnen der Motorventile auf die Ventilöffnungseinrichtungen, kann die Nockenwelle jedes Mal minimal abgebremst werden und so eine Druckschwankung im Nockenwellenverstellersystem verursacht werden. Bei Zusammenwirken der oszillierenden Drücke der Hydraulikflüssigkeiten kann es nun vorkommen, dass sich bei ungünstiger Überlagerung der anliegenden Drücke das geschlossene Rückschlagventil kurzzeitig öffnet. Übersteigt der Druck ungeplant auf Seite der Ölpumpe den anliegenden Druck seitens des Nockenwellenverstellers, kann diese Druckdifferenz zu einem kurzeitigen Öffnen des Ventils führen und dem Nockenwellenversteller das hydraulische Druckmittel ungewollt zuführen. Dieser Effekt kann durchaus die Einstellung der Ventilöffnungszeiten und somit der gesamten Motorsteuerung beeinflussen.
Bei einer direkt darauf folgenden Umkehr der Druckverhältnisse können größere Mengen von Druck- oder Schmiermittel aus dem Nockenwellenversteller über das geöffnete Rückschlagventil abfließen. Dies führt zu einer signifikanten Verringerung der Verstellgeschwindigkeit und ungewollten Schwankungen der Phasenlage der Nockenwelle relativ zur Kurbelwelle.

In einer beispielhaften Ausführungsform der Erfindung durchläuft das Ventilelement bei einer solchen ungewollten Öffnung aufgrund von Druckschwankungen zunächst den zweiten Bewegungsbereich mit reduzierten Strömungsquerschnitt, bevor in dem ersten Bewegungsbereich des Ventilelements ein signifikanter Volumenstrom fließen kann. Im Vergleich zu herkömmlichen Rückschlagventilen, die bei ungünstigen Druckschwankungen sich direkt Öffnen, so dass ein hoher Volumenstrom auftritt, kommt es bei der vorliegenden Erfindung bei ungünstigen Druckschwankungen lediglich zu einem geringen Volumenstrom. Dies ist darin begründet, dass das Ventilelement zunächst den zweiten Bewegungsbereich mit dem reduzierten Strömungsvolumen durchläuft bevor das Strömungsvolumen im ersten Bewegungsbereich stetig vergrößert wird. In einem System mit hohen Druckschwankungen, kann die Länge des zweiten Bewegungsbereichs konstruktiv verändert werden, so dass eine größere Pufferstrecke bereitgestellt werden kann. Somit wird erst bei länger andauernden und stärkeren Druckdifferenzen zwischen dem Zulauf und der Ablauföffnung das Rückschlagventil geöffnet. Handelt es sich lediglich um schwankende Drücke, bleibt das Ventilelement somit in dem zweiten Bewegungsbereich. Das Ventilelement kann im geschlossenen Zustand bei überlagerten Drücken in Bewegung sein, ohne dass wesentlich Druckmittel zwischen der Zulauföffnung und der Ablauföffnung ausgetauscht wird.

Gemäß einer weiteren beispielhaften Ausführungsform ist an der Zulauföffnung ein erstes Druckniveau anlegbar und an der Ablauföffnung ist ein zweites Druckniveau anlegbar. Ist das erste Druckniveau größer als das zweite Druckniveau, ist das Ventilelement von der Dichtkante beabstandet. Ist das zweite Druckniveau größer als das erste Druckniveau, bewegt sich das Ventilelement auf die Dichtkante zu. Das Ventilelement bewegt sich damit selbstständig aufgrund der Druckunterschiede zwischen dem ersten Druckniveau und dem zweiten Druckniveau. Somit kann ohne eine externe Steuerung eine bestimmte Strömungsrichtung eines Mediums sichergestellt werden.
In einer weiteren beispielhaften Ausführungsform weist das Ventilgehäuse eine Dichtkante auf, an welcher das Ventilelement anliegt, wenn es sich in der zweiten Position befindet. Damit wird die Auflagefläche des Ventilelements in der zweiten Position verringert, so dass bei dem Öffnungsvorgang des Ventils früher eine Strömung des hydraulischen Mittels einstellen kann.

In einer weiteren beispielhaften Ausführungsform weist das Ventilgehäuse in dem zweiten Bewegungsbereich eine konische Innenfläche auf, so dass der Strömungsquerschnitt in dem zweiten Bewegungsbereich zwischen dem Ventilelement und dem Gehäuse kontinuierlich reduzierbar ist. Wenn dabei das Ventilelement den zweiten Bewegungsbereich durchläuft, reduziert sich zwischen der Kante des Ventilelements und der konisch zulaufenden Innenfläche des Ventilgehäuses der Strömungsquerschnitt kontinuierlich. Somit können die Druckspitzen verbessert abgebaut werden, wodurch angeschlossene Verbraucher nicht geschädigt werden.

In einer weiteren beispielhaften Ausführungsform ist das Ventilelement mit einer Federkraft und/oder einer Magnetkraft bewegbar. Die Federkraft und/oder die Magnetkraft wirkt dabei in Richtung der Zulauföffnung, wodurch die Bewegung des Ventilelements unterstützt werden kann. Je nach Stärke der Federkraft oder der Magnetkraft ist ein Druckunterschied zwischen dem Druckniveau an der Zulauföffnung und der Ablauföffnung einstellbar, bei dem sich das Ventilelement öffnet bzw. schließt. Durch eine definierte Auswahl der Federkraft oder der Magnetkraft kann dadurch eine Aktivierung des Rückschlagventils gezielt gesteuert werden.

In einer weiteren beispielhaften Ausführungsform der vorliegenden Erfindung weist die Zulauföffnung eine erste Flächennormale und die Ablauföffnung eine zweite Flächennormale auf. Die erste Ablauföffnung und die Zulauföffnung sind dabei derart am Ventilgehäuse angeordnet, dass sich die Flächennormalen schneiden. Mit dieser Anordnung der Zulauf- und der Ablauföffnung kann eine Strömung in jegliche beliebige Richtung umgelenkt werden. In einer weiteren beispielhaften Ausführungsform der Erfindung sind die Zulauföffnung und die Ablauföffnung derart am Ventilgehäuse angeordnet, dass sich die erste Flächennormale und die zweite Flächennormale rechtwinklig schneiden.

In einer weiteren beispielhaften Ausführungsform weist das Ventilgehäuse eine weitere Ablauföffnung auf, wobei die weitere Ablauföffnung eine weitere Flächennormale aufweist. Die weitere Flächennormale der weiteren Ablauföffnung ist parallel zu der ersten Flächennormale der Zulauföffnung ausgerichtet. In der weiteren Ablauföffnung ist das zweite Druckniveau angelegbar. Somit wirkt aufgrund der zweiten Ablauföffnung das zweite Druckniveau in seiner Wirklinie entgegen einer Wirklinie des ersten Druckniveaus, welches durch die Zulauföffnung auf das Ventilelement einwirkt. Damit kann das Ventilelement besser aktiviert werden, da die Wirklinien des ersten und zweiten Druckniveaus direkt gegenüberstehen und somit eine verbesserte Aktivierung zulassen. Ein Austausch des Strömungsmittels von der weiteren Ablauföffnung zu der Zulauföffnung ist nicht notwendig.

In einer weiteren beispielhaften Ausführungsform des Verfahrens wird an einer Zulauföffnung ein erstes Druckniveau angelegt und an der Ablauföffnung wird ein zweites Druckniveau angelegt. Wenn das erste Druckniveau größer als das zweite Druckniveau ist, ist das Ventilelement beabstandet von der Dichtkante. Wenn das Druckniveau größer als das erste Druckniveau ist, nähert sich das Ventilelement an die Dichtkante an. Somit kann das Ventilelement automatisch aufgrund der Druckunterschiede selbstständig zwischen der ersten und zweiten Position verfahren.
In einer weiteren beispielhaften Ausführungsform des Verfahrens ist das Ventilelement in der zweiten Position an einer Dichtkante angelegt.

In einer weiteren beispielhaften Ausführungsform des Verfahrens wird der Strömungsquerschnitt in dem zweiten Bewegungsbereich mittels einer konischen Oberfläche des Ventilgehäuses kontinuierlich reduziert.

Gemäß einer weiteren beispielhaften Ausführungsform des Verfahrens wird das Ventilelement mittels einer Federkraft und/oder einer Magnetkraft bewegt.

Die Ausgestaltungen der Rückschlagventilvorrichtung gelten für das Verfahren und für die Verwendung und umgekehrt.

Als Einsatzort des erfindungsgemäßen Rückschlagventils eignen sich bei einem Nockenwellenverstellsystem insbesondere die Druckleitungen zwischen den hydraulischen Druckkammern oder auch in den Druckleitungen zwischen der Ölpumpe und einem Nockenwellenvertellsystem

Bei aggressiven Auf- und Zustellungen, wie bei üblichen Rückschlagventilen, kann ein relativ hoher Druckverlust entsteht. Diese üblichen Rückschlagventile können durch ihre Schwingeigenschaften Nachteile im gesamten hydraulischen System erzeugen, wie z. B. beim Nockenwellenversteller. Standardrückschlagventile benötigen annähernd statische Zustände und hohe Volumenströme, um effizient zu sein. Im dynamischen Einsatz und bei geringem Volumenstrom zeigen diese jedoch Schwächen. Mit Einsatz des beschriebenen Rückschlagventils, bei dem die Übergangsgrenzen zwischen geschlossenem und geöffnetem Zustand weich gestaltet werden, können einwandfreie Funktionen selbst bei oszillierenden anliegenden Drücken gewahrt werden, die Dauerhaltbarkeit kann erhöht werden und außerdem können Druckspitzen und hohe Druckverluste vermieden werden. Gerade bei Einsatz in einem Nockenwellenverstellsystem können Verstellgeschwindigkeiten des Nockenwellenverstellers erhöht werden und es kann ebenfalls eine Verstellbereitschaft verbessert werden. Die anderen in dem hydraulischen System anliegenden Bauteile werden durch die Reduzierung der Druckspitzen weniger belastet, so dass die Haltbarkeit sowie die Funktion dieser Bauteile erhöht wird. Ferner kann der Schließvorgang vorteilhaft verlaufen.

### Kurze Beschreibung der Zeichnungen

Im Folgenden werden zur weiteren Erläuterung und zum besseren Verständnis der vorliegenden Erfindung Ausführungsbeispiele unter Bezugnahme auf die beigefügte Zeichnung näher beschrieben. Es zeigt:

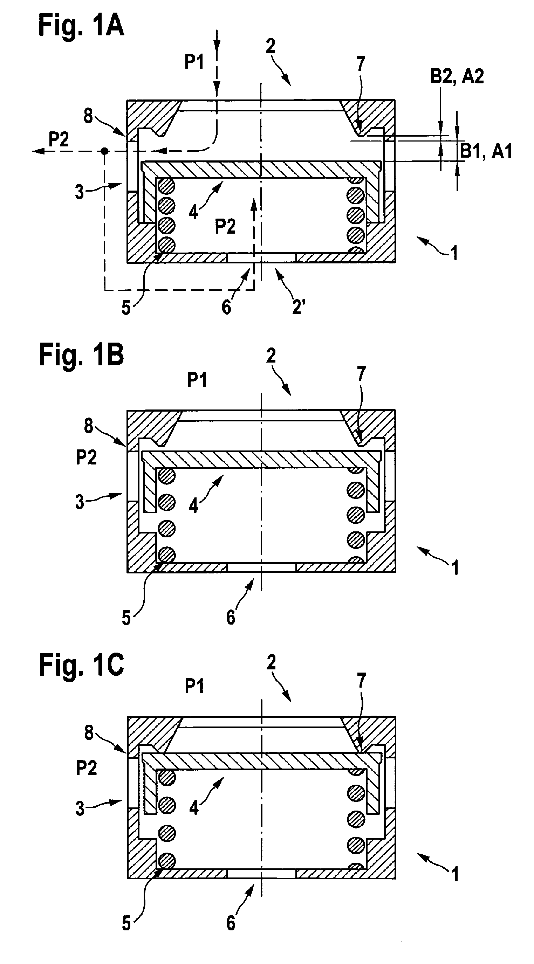

- Fig. 1A bis 1C: eine schematische Darstellung einer beispielhaften Ausführungsform der Rückschlagventilvorrichtung.

### Detaillierte Beschreibung von exemplarischen Ausführungsformen

Gleiche oder ähnliche Komponenten in unterschiedlichen Figuren sind mit gleichen Bezugsziffern versehen. Die Darstellungen in den Figuren sind schematisch und nicht maßstäblich.

Fig. 1A bis 1C zeigt eine Rückschlagventilvorrichtung für ein Kraftfahrzeug gemäß einer beispielhaften Ausführungsform der Erfindung. Das Rückschlagventil weist ein Ventilgehäuse 1 mit einer Zulauföffnung 2 und einer Ablauföffnung 3 sowie ein Ventilelement 4 auf, welches im Ventilgehäuse 1 beweglich gelagert ist. Wenn sich das Ventilelement 4 in einer ersten Position befindet, stellt sich dabei ein erster Strömungsquerschnitt A1 zwischen der Ablauföffnung 3 und dem Ventilelement 4 ein (Fig. 1A). Befindet sich das Ventilelement 4 in einer zweiten Position, ist die Ablauföffnung 3 von dem Ventilelement 4 geschlossen. Es wird somit kein Strömungsquerschnitt bereitgestellt. Bei Bewegung des Ventilelements 4 in einen ersten Bewegungsbereich B1 und in einen zweiten Bewegungsbereich B2 wird jeweils der Strömungsquerschnitt A stetig geändert. Dabei ist diese stetige Änderung des Strömungsquerschnitts A innerhalb des ersten Bewegungsbereichs B1 verschieden von der stetigen Änderung des zweiten Bewegungsbereichs B2.

Ist das Ventilelement 4 in der ersten Position, so bildet sich zwischen der Oberkante des Ventilelements 4 und einer sog. Steuerkante 8 der erste Bewegungsbereich B1 aus, der einen Strömungsquerschnitt A1 bildet. An der Zulauföffnung liegt ein erstes Druckniveau P1 und an der Ablauföffnung ein zweites Druckniveau P2 an. Ändert sich das Druckverhältnis von P1 größer gleich P2 zu P2 größer gleich P1, so setzt sich das Ventilelement 4 aufgrund des Druckniveaus P2 in Richtung der Zulauföffnung 2 in Bewegung, um das Ventil bzw. den Strömungsquerschnitt zu verschließen. Während das Ventilelement 4 den ersten Bewegungsbereich B1 abfährt, verringert sich der Strömungsquerschnitt A1 kontinuierlich.

Zwischen der Steuerkante 8 und der Verschlussstellung wird der zweite Bewegungsbereich B2 definiert. Fährt das Ventilelement 4 den zweiten Bewegungsbereich B2 ab, so bleibt der Strömungsquerschnitt A1 bis zum Verschluss der Zulauföffnung im Bereich B2 nahezu konstant. Damit wird ein plötzliches Verschließen bzw. ein schlagartiger Abbruch des Strömungsflusses unterbunden. Druckspitzen, die aufgrund der Trägheit der Druckmittelsäule in den Druckmittelleitungen entstehen können, werden vermieden.

Weiterhin ist es denkbar, die Innenfläche des Ventilgehäuses 1 im zweiten Bewegungsbereich B2 konisch zulaufend auszuführen, um bei Passieren des Ventilelements 4 eine kontinuierliche Reduzierung eines Strömungsquerschnitts A2 einzustellen.

Zudem wird in Fig. 1A bis 1C ein Antriebselement 5 dargestellt, wodurch das Ventilelement 4 in seiner Bewegung unterstützt wird. Das Antriebselement 5 kann dabei aus einem Federelement oder aus einem Magneten, d. h. beispielsweise einem Permanentmagneten oder einem Elektromagneten, ausgebildet sein. Damit kann man die Sensibilität der Verfahrbewegung des Ventilelements einstellen. Ist beispielsweise der Druckunterschied zwischen dem Druck P1 und dem Druck P2, d. h. in dem Falle, dass der Druck P2 größer gleich dem Druck P1 ist sehr gering, so kann mit Hilfe eines Antriebselements 5 das Ventilelement 4 dennoch in Bewegung gesetzt werden, um die Zulauföffnung 2 zu schließen.

Weiterhin zeigen die Fig. 1A bis 1C, dass die Zulauföffnung vertikal zur Bildebene und die Ablauföffnung horizontal zur Bildebene ausgeführt sein kann. Die Flächennormale der Zulauffläche 2' schneidet dabei die Flächennormale der Ablauföffnung 3. Damit kann eine Umlenkung der Strömungsrichtung erreicht werden und mittels dem Rückschlagventil dennoch eine Umkehr der Strömung vermieden werden. Im geschlossenen Zustand kann sich das Druckmittel zudem an dem Ventilelement abstützen, ohne das die Wirkline der Druckkraft P2 die Wirklinie der Druckkraft P1 bzw. die Bewegungsrichtung des Ventilelements 4 beeinflusst.

In Fig. 1A bis 1C wird der Schließ- und Öffnungsvorgang des erfindungsgemäßen Rückschlagventils beschrieben. Zu Beginn in Fig. 1A ist das Ventil in einer geöffneten Stellung. Steigt das Druckniveau P2 über das Druckniveau P1 an, so bewegt sich das Ventilelement 4 in Richtung der Zulauföffnung 2. Bis zur Steuerkante 8 vermindert sich der Strömungsquerschnitt A1 sehr stark, so dass das Strömungsvolumen unterbrochen wird. Ab dem zweiten Steuerbereich B2, d. h. zwischen der Steuerkante 8 und der geschlossenen Stellung, bleibt ein geringer Strömungsquerschnitt A2 jedoch nahezu konstant, so dass Druckspitzen und Schwingungen dennoch abgebaut werden können.

Um die Bewegung des Ventilelements 4 gerade im Schließvorgang zu unterstützen, kann parallel zu der Flächennormale der Zulauföffnung 2 eine weitere Ablauföffnung 6 in dem Gehäuse angeordnet werden, so dass bei Einströmen des Mediums mittels einem Druckniveau P2 das Ventilelement 4 in seiner Schließbewegung unterstützt wird.

Im Folgenden wird anhand der Figuren 1A bis 1C beispielhaft ein Schließvorgang eines erfindungsgemäßen Rückschlagventils beschrieben:

Zu Beginn ist der Druck P1 höher als der Druck P2. Dadurch öffnet das Rückschlagventil und das Medium strömt von der Zulauföffnung 2 zu der Ablauföffnung 3 (Fig. 1A). Ist der Druck P2 höher als der Druck P1 kehrt sich der Volumenstrom um und das Ventilelement 4 des Rückschlagventils bewegt sich in Richtung der Schließposition. Zuerst gelangt das Ventilelement 4 bzw. die Platte an die Steuerkante 8. Bei Erreichen der Steuerkante 8 wird der rückläufige Volumenstrom weitgehend unterbunden und die Ablauföffnung 3 ist von der Zulauföffnung 2 weitestgehend getrennt (Fig. 1 B). Ein reduzierter Volumenstrom kann lediglich aufgrund von Leckagen fließen, da die Innenfläche der Steuerkante von der Kante des Ventilelements minimal beabstandet ist. Der Druck P2 steigt nun kontinuierlich an und die Platte bzw. das Ventilelement 4 schlägt auf die Dichtkante 7 (Fig. 1C). Das Rückschlagventil ist nun vollständig geschlossen und die Zulauföffnung 2 ist von der Ablauföffnung 3 getrennt. Außerdem werden Volumenströme aufgrund von Leckagen im wesentlichen vollständig unterbrochen.

Die Reduzierung der Druckspitzen erfolgt dadurch, dass der Schließprozess des Rückschlagventils in zwei Schritten erfolgt. Zuerst wird die Ablauföffnung 3 durch die Steuerkante 8 von der Zulauföffnung 2 weitestgehend getrennt. Dieser Vorgang löst keine Druckspitzen im System aus. Im nächsten Schritt schließt die Dichtkante 7, welches zu einer vollständigen Trennung der Ablauföffnung 2 und der Zulauföffnung 3 führt. Durch den vorgeschalteten Schließvorgang gelangt die Platte bzw. das Ventilelement 4 gedämpft in den Dichtsitz, wodurch deutlich geringere Druckspitzen im Hydrauliksystem entstehen.

Ebenfalls kann eine Erhöhung der Verstellgeschwindigkeit und eine Verbesserung der Verstellbereitschaft des erfindungsgemäßen Rückschlagventils erfolgen. Beim Aufschlagen der Platte 4 in den Dichtsitz ist dieser bedingt durch das schwingfähige System nicht sofort geschlossen. Durch die Steuerkante 8 ist die Schließung jedoch schon erfolgt, wodurch das Rückschlagventil frühzeitig sich in seiner definierten Schließposition befindet. Dies führt dazu, dass die entstehenden Drucksäulen, im Ablauf erzeugt beispielsweise von der Rückwärtsbewegung des Nockenwellenverstellers, sich auf dem Rückschlagventil frühzeitig abstützen können und der Nockenwellenversteller nur gedämpft zurück schwingen kann.

Ist der Druck P1 größer als der Druck P2 öffnet das Rückschlagventil. Erfolgt nun eine kurzzeitige Druckdifferenzverlagerung, so ist das Rückschlagventil direkt nachdem das Ventilelement 4 vom Dichtsitz abhebt nicht vollständig geöffnet, so dass die Ölsäule im Ablauf bei fortgeführter Rückwärtsbewegung des Verstellers bzw. des Ventilelements 4 immer noch eine definierte Schließposition des Rückschlagventils vorfindet und sich sofort auf dem Rückschlagventil abstützen kann.

Ergänzend ist darauf hingewiesen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Rückschlag-Ventilvorrichtung für ein Nockenwellenverstellersystem, wobei die Rückschlag-Ventilvorrichtung aufweist:
ein Ventilgehäuse (1) mit einer Zulauföffnung (2), mit einer Ablauföffnung (3) und mit einer Dichtkante (7);
ein Ventilelement (4), welches im Ventilgehäuse (1) beweglich gelagert ist;
wobei, wenn sich das Ventilelement (4) in einer ersten Position befindet, ein erster Strömungsquerschnitt (A1) zwischen der Ablauföffnung (3) und dem Ventilelement (4) bereitstellbar ist;
wobei, wenn sich das Ventilelement (4) in einer zweiten Position befindet, die Ablauföffnung (3) von dem Ventilelement (4) geschlossen ist;
wobei bei Bewegung des Ventilelements (4) in einem ersten Bewegungsbereich (B1) eine stetige Änderung des Strömungsquerschnitts (A1) erfolgt;
wobei bei Bewegung des Ventilelements (4) in einem zweiten Bewegungsbereich (B2) ein gegenüber dem ersten Strömungsquerschnitt (A1) reduzierter Strömungsquerschnitt (A2) bereitstellbar ist; und
wobei das Ventilelement (4) an der Dichtkante (7) anliegt, wenn es sich in der zweiten Position befindet.

2. Rückschlag-Ventilvorrichtung nach Anspruch 1,
wobei an der Zulauföffnung (2) ein erstes Druckniveau (P1) anlegbar ist;
wobei an der Ablauföffnung (3) ein zweites Druckniveau (P2) anlegbar ist;
wobei, wenn das erste Druckniveau (P1) größer als das zweite Druckniveau (P2) ist, das Ventilelement (4) von der Dichtkante (7) beabstandet ist;
wobei, wenn das zweite Druckniveau (P2) größer als das erste Druckniveau (P1) ist, das Ventilelement (4) auf die Dichtkante (7) zubewegt.

3. Rückschlag-Ventilvorrichtung nach einem der vorangegangenen Ansprüche,
wobei das Ventilgehäuse (1) im zweiten Bewegungsbereich (B2) eine konische Innenfläche aufweist, so dass der Strömungsquerschnitt im zweiten Bewegungsbereich (B2) zwischen dem Ventilelement (4) und dem Gehäuse (1) kontinuierlich reduzierbar ist.

4. Rückschlag-Ventilvorrichtung nach einem der vorangegangenen Ansprüche,
wobei das Ventilelement (4) mit einer Federkraft und/ oder einer Magnetkraft bewegbar ist.

5. Rückschlag-Ventilvorrichtung nach einem der vorangegangenen Ansprüche,
bei der die Zulauföffnung (2) eine erste Flächennormale (2') und die Ablauföffnung (3) eine zweite Flächennormale ausbildet,
wobei die Ablauföffnung (3) und die Zulauföffnung (2) derart am Ventilgehäuse (1) angeordnet sind, dass sich die beiden Flächennormalen schneiden.

6. Rückschlag-Ventilvorrichtung nach Anspruch 5,
wobei die Ablauföffnung (3) und die Zulauföffnung (2) derart am Ventilgehäuse (4) angeordnet sind, dass sich die erste Flächennormale (2') und die zweite Flächennormale rechtwinklig schneiden.

7. Rückschlag-Ventilvorrichtung nach einem der Ansprüche 2 bis 7;
wobei das Ventilgehäuse (1) eine weitere Ablauföffnung (6) aufweist;
wobei die weitere Ablauföffnung (6) eine weitere Flächennormale aufweist;
wobei die weitere Flächennormale der weiteren Ablauföffnung (6) parallel zu der ersten Flächennormale (2') der Zulauföffnung (2) ausgerichtet ist;
wobei an der weiteren Ablauföffnung (6) das zweite Druckniveau (P2) anlegbar ist.

8. Verfahren zur Steuerung einer Strömungsrichtung eines Mediums für ein Kraftfahrzeug, wobei das Verfahren aufweist:
Bereitstellen eines Strömungsquerschnitts (A1) zwischen einer Ablauföffnung (3) eines Ventilgehäuses (1) und einem Ventilelement (4), wenn sich das Ventilelement (4) in einer ersten Position befindet;
Bewegen des Ventilelements (4) zwischen der ersten Position und einer zweiten Position; und
stetiges Ändern des ersten Strömungsquerschnitts (A1) beim Bewegen des Ventilelements (4) in einem ersten Bewegungsbereich (B1) ;Bereitstellen eines gegenüber dem ersten Strömungsquerschnitt (A1) reduzierten Strömungsquerschnitts (A2) beim Bewegen des Ventilelements (4) in einem zweiten Bewegungsbereich (B2); und
Schließen des reduzierten Strömungsquerschnitts (A2) zwischen der Ablauföffnung (3) und dem Ventilelement (4) mittels einer Dichtkante (7), wenn sich das Ventilelement (4) in der zweiten Position befindet.

9. Verfahren nach Anspruch 8;
Anlegen eines ersten Druckniveaus (P1) an der Zulauföffnung (2); und
Anlegen eines zweiten Druckniveaus (P2) an der Ablauföffnung (3);
Beabstanden des Ventilelements (4) von der Dichtkante (7),wenn das erste Druckniveau (P1) größer als das zweite Druckniveau (P2) ist, sich das Ventilelement (4) in der ersten Position befindet; und
Annähern des Ventilelements (4) an die Dichtkante, wenn das zweite Druckniveau (P2) größer als das erste Druckniveau (P1) ist, sich das Ventilelement (4) in der zweiten Position befindet;

10. Verfahren nach einem der Ansprüche 8 bis 9,
kontinuierliches Reduzieren des Strömungsquerschnitts in dem zweiten Bewegungsbereich (B2) aufgrund einer konische Innenfläche des Ventilgehäuses (1).

11. Verfahren nach einem der Ansprüche 8 bis 10,
Bewegen des Ventilelements (4) mittels einer Federkraft und/oder einer Magnetkraft.

12. Verwendung einer Rückschlag-Ventilvorrichtung gemäß einem der Ansprüche 1 bis 7 in einem Kraftfahrzeug.

13. Verwendung einer Rückschlag-Ventilvorrichtung gemäß einem der Ansprüche 1 bis 7 in einem Nockenwellenverstellsystem und/oder in einem hydraulischen Riemen- oder Kettenspannsystem.
